# EUROPEAN PATENT SPECIFICATION

(11) **EP 0 949 356 B1**
(45) Date of publication and mention of the grant of the patent: **23.10.2002**
(21) Application number: 99200870.6
(22) Date of filing: 19.03.1999
(51) Int. Cl.: C25D 3/56, B29C 70/88, B29B 15/14

(54) **Surface-treated metal component for reinforcing structures for manufactured products made of vulcanized elastomeric material and article of manufacture comprising the same**
Oberflächenbehandeltes Metallkomponent für die Verstärkung von Strukturen für Produkte aus vulkanisiertem elastomerem Material und daraus hergestellter Gegenstand
Composant métallique, ayant subi une traitement de surface, pour le renforcement de structures de produits fabriqués à partir de matériaux élastomères vulcanisés

(30) Priority: 27.03.1998 EP 98830183
(43) Date of publication of application: 13.10.1999
(73) Proprietor: PIRELLI PNEUMATICI Società per Azioni, 20126 Milano (IT)
(72) Inventor: Pavan, Federico, 50136 Firenze (IT); Ratti, Giuseppina, 20038 Seregno (Milano) (IT)
(74) Representative: Marchi, Massimo

(56) References cited:
- EP-A- 0 669 409
- PATENT ABSTRACTS OF JAPAN vol. 010, no. 185 (C-357), 27 June 1986 & JP 61 034194 A (HITACHI LTD), 18 February 1986
- CHEMICAL ABSTRACTS, vol. 93, no. 16, 20 October 1980 Columbus, Ohio, US; abstract no. 153972, ARIGA, KEIJI ET AL: "A consideration on the corrosion resistance of zinc-cobalt based cobalt-electrogalvanized steel sheet" XP002081559 & TETSU TO HAGANE (1980), 66(7), 797-806 CODEN: TEHAA2;ISSN: 0371-6279,1980,

## Description

The present invention relates to a reinforcing structure for manufactured products made of vulcanized elastomeric material, which is surface-coated with a metal alloy and an article of manufacture comprising at least one metal wire surface-coated with a metal alloy and buried in a vulcanized elastomeric material.

More specifically, the present invention relates to a reinforcing structure for manufactured products made of elastomeric material, which is surface-coated with a ZnMoX alloy where X is a metal chosen from the group comprising cobalt, iron and nickel.

It is known that certain manufactured products made of vulcanized elastomeric material are reinforced by embedding suitable metal structures within an elastomeric matrix. Generally, the said metal structure is made of steel cords and/or wires.

It is also known that, on account of its excellent mechanical properties, the metal of choice for the said structure is steel. However, its chemical properties are not excellent since they do not ensure good adhesion to the vulcanized elastomeric material and they impart poor corrosion resistance.

It is thus necesary to coat the steel wires with a metal or a metal alloy so as to give this steel corrosion-resistance and ensure good adhesion to the vulcanized elastomeric material.

Moreover, given that, once coated, the abovementioned steel wires are subjected to a drawing process which is carried out several times until the desired dimensions of the wire are obtained, the coating should not interfere with the drawing process or cause any appreciable deterioration to the wire.

The choice of the most suitable coating is also conditioned by the fact that this coating can be applied by a simple, cost-effective and clean technique, such as electrodeposition.

An alloy which has been used for a long time for coating steel wires for reinforcing manufactured products made of vulcanized elastomeric material, is brass (copper/zinc alloy with about 70% copper (Cu) and 30% zinc).

In this case the adhesion is promoted thanks to the formation of a thin layer of copper sulphide CuₓS by the sulphur itself or by known derivatives thereof present in the mixture as vulcanizing agents.

Even though, brass coated steel well adheres to a vulcanized elastomeric matrix, said adhesion decays in time because of the action of humidity/oxigen. Indeed in articles made of a vulcanized elastomeric material reinforced by brass coated steel wires optionally in the form of cords, such as, for example, tires, corrosion is caused both by humidity, which permeates the elastomer, and by water which comes into contact with the reinforcing structure made of brass coated steel through holes or tears in the elastomer.

Said brass/elastomer adhesion failure may be partially opposed by adding some cobalt in the form of a salt (US 5 356 711). It is believed that cobalt reduces the electrical conductivity of the layer of copper sulphide; this would slow the diffusion rate of Zn⁺⁺ ions and, as a consequence, reduce the growing rate of the ZnO/Zn(OH)₂ interface layer which is responsible for the destruction of the CuₓS film and thus for the adhesion.

However, the resulting octonate steel suffers the drawbacks characteristically associated with copper, i.e. rapid degradation both of the adhesion to the vulcanized elastomeric material and of the corrosion protection.

Ternary alloys formed of brass (Cu/Zn) and a third metal such as, for example, cobalt (Co) or manganese (Mn) have therefore been proposed.

French Patent FR 2,413,228 and FR 2,426,562 disclose a metal wire coated with a ternary alloy composed of brass and cobalt, with a cobalt content of betwen 0.5 and 30% by weight.

The abovementioned ternary alloys have proved to have greater corrosion resistance and to be capable of adhering to the vulcanized elastomeric material over time, but such enhancements were still unsatisfactory on account of the presence of copper.

Research was thus carried out into alloys which would not contain copper and which would also possess the desired properties of adhesion to the vulcanized elastomeric material, corrosion resistance and drawability. Binary zinc alloys were thus tested.

Appliction EP-A-0,694,631 describes a metal wire coated with a binary alloy composed of zinc and manganese, with a manganese content of between 5 and 80% by weight.

Application EP-A-0,669,409 describes a metal wire coated with a binary alloy composed of zinc and cobalt, with a cobalt content of less than 1% by weight.

Although they demonstrate better corrosion resistance than the abovementioned ternary alloys, the abovementioned binary alloys do not offer significant improvements as regards adhesion.

Patent Abstracts of Japan vol. 10, no. 185 (C-357), 27 June 1986 & JP 61 034194A, 18 February 1986, discloses a steel sheet plated with a Zn-Co-Mo or Zn-Mo-Ni alloy. Chemicals Abstracts, vol. 93, no. 16, 20 October 1980, Columbus, Ohio, US, discloses a study of the corrosion resistance of a Zn-Co-Mo alloy coated steel sheet.

Therefore, still there is a need to comply concurrently with both the requirements of a good resistance of the wire to corrosion and a good adhesion of the wire to a vulcanized elastomeric matrix.

It has now been found, surprisingly, that a ZnMoX ternary alloy has a drawability, a corrosion-resistance and an adhesion to the vulcanized elastomeric material after age-hardening which are better than those afforded by brass, zinc alone or the Zn/Mn and Zn/Co binary alloys described in European patent applications Nos EP 694,631 and EP 669,409.

In a first aspect, the present invention thus relates to a reinforcing structure for manufactured products made of vulcanized elastomeric material according to claim 1.

The molybdenum content in the alloy of the present invention is preferably of from 0.05 to 3% by weight, even more preferably of from 0.1 to 1% by weight.

The zinc content in the alloy of the present invention is preferably of from 95 to 99.9% by weight, even more preferably of from 98 to 99.5% by weight.

The content of the third metal is preferably of from 0.05 to 2% by weight, even more preferably of from 0.1 to 1% by weight.

Typically, the said surface coating layer is formed by electrodeposition on the surface of the said steel wire.

The thickness of the said coating layer on the steel wire, before drawing, is preferably of from 1 to 4 microns. However, after drawing, this thickness is typically of from 0.1 to 0.4 micron.

Preferred examples of zinc salts which are suitable for carrying out the electrodeposition process according to the invention are those chosen from the group comprising sulphate, sulphamate, hypophosphite, picrate, selenate and thiocyanate. Even more preferably, these are sulphate and sulphamate.

Preferred examples of molybdenum salts which are suitable for carrying out the electrodeposition process according to the invention are those chosen from the group comprising tetrabromide, oxydibromide, oxytetrachloride, oxydichloride, oxypentachloride, oxytetrafluoride, metaphosphate, phosphide and ammoniacal complexes. Even more preferably, the molybdenum salt is the ammoniacal complex of empirical formula (NH₄)₆Mo₇O₂₄.4H₂O.

Preferred examples of cobalt salts which are suitable for carrying out the electrodeposition process according to the invention are those chosen from the group comprising divalent cobalt iodate, fluorides or chlorides and divalent cobalt thiocyanate and sulphates. Even more preferably, the cobalt salt is divalent cobalt sulphate.

The electrolytic deposition of an alloy ZnMoX, in which X is a metal chosen from the group comprising cobalt, iron and nickel, onto a steel wire comprises passing the said steel wire through an electrolytic bath consisting of an aqueous solution of a zinc salt, a molybdenum salt and a salt of a metal X, the said electrolytic bath having:
- a temperature of from 20 to 50°C;
- a pH of from 2 to 6; and
- a cathode density of from 10 to 50 A/dm².

Typically, the throughput speed of the said wire is of from 10 to 70 m/min, and even more typically of from 20 to 50 m/min.

Typically, the zinc salt is a sulphate. Even more typically, the zinc sulphate is zinc sulphate heptahydrate.

Typically, the molybdenum salt is an ammoniacal complex. Even more typically, it is the ammoniacal molybdenum complex (NH₄)₆Mo₇O₂₄.4H₂O.

In a preferred embodiment, the steel wire is immersed in an electrolytic bath comprising a molybdenum salt, a zinc salt and a cobalt salt.

Preferably, the electrolytic bath of the embodiment has a temperature of from 20 to 40°C, a pH of from 2 to 4 and a cathode density of from 10 to 40 A/dm².

In a second aspect, the present invention relates to a manufactured product made of vulcanized elastomeric material according to claim 9.

Typically, said article is a tire, a conveyor belt, a trasmission belt or a flexilble hose.

Further, it has been surprisingly found that a steel wire surface-coated with a ZnMoX alloy of the present invention has a better adhesion to the vulcanized elastomeric matrix than a steel wire coated with brass when said vulcanized elastomeric matrix comprises a suitable adhesion promoter corresponding to at least 0.2% by weight of bivalent cobalt metal with respect to the weight of the elastomeric material.

Therefore, in a third aspect this invention provides an article of manufacture comprising at least one metal wire buried in a vulcanized elastomeric matrix according to claim 17.

Preferably, the amount of said salt of bivalent cobalt corresponds to an amount of bivalent cobalt metal of from 0.2 to 1% by weight with respect to the weight of said elastomer.

Preferably, said salt of bivalent cobalt is selected from the group comprising carboxylate compounds of formula (I)

(R-CO-O)₂Co (I)

wherein R is a C₆₋₂₄ aliphatic or aromatic group,
cobalt-boron complexes of formula (II) 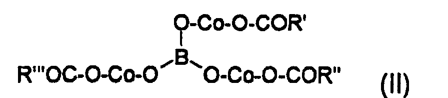 wherein R', R" and R"', equal or different each other, are a C₆₋₂₄ aliphatic or aromatic group, and mixture thereof.

Preferred examples of R-CO-O-, R'-CO-O-, R"-CO-O- and R"'-CO-O- are those selected from the group comprising n-heptanoate, 2,2-dimethyl pentanoate, 2-ethyl-pentanotate, 4,4-dimethyl-pentanoate, 2-ethyl-esanoate, n-octanoate, 2,2-dimethyl-esanoate, neodecanoate and naphthenate.

A preferred example of a salt of formula (I) is cobalt neodecanoate.

A preferred example of a salt of formula (II) is cobalt-boron 2-ethyl-esanoate-neodecanoate.

Typically, the mixture may further comprise other conventional ingredients such as, for example, silica, resorcin and hexamethoxymethylamine.

The present invention is further illustrated by the following Examples and Figures which are intended to illustrate the present invention without limiting it in any way.

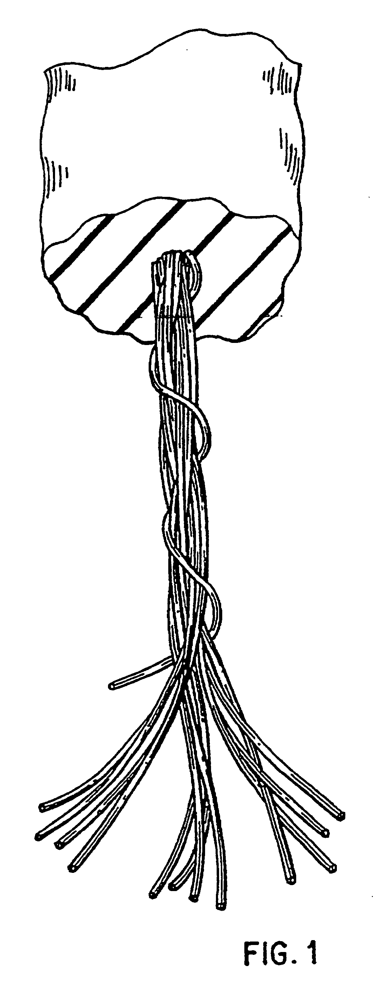

Figure 1 shows a wire cord of the present invention buried in a vulcanized elastomeric matrix;
Figure 2 is a sectional view of a tire in accordance with the invention;
Figure 3 is a perspective view in section of a conveyor belt in accordance with the invention;
Figure 4 is a perspective view in section of a transmission belt in accordance with the invention;
Figure 5 is a perspective view in section of a flexible hose in accordance with the invention.

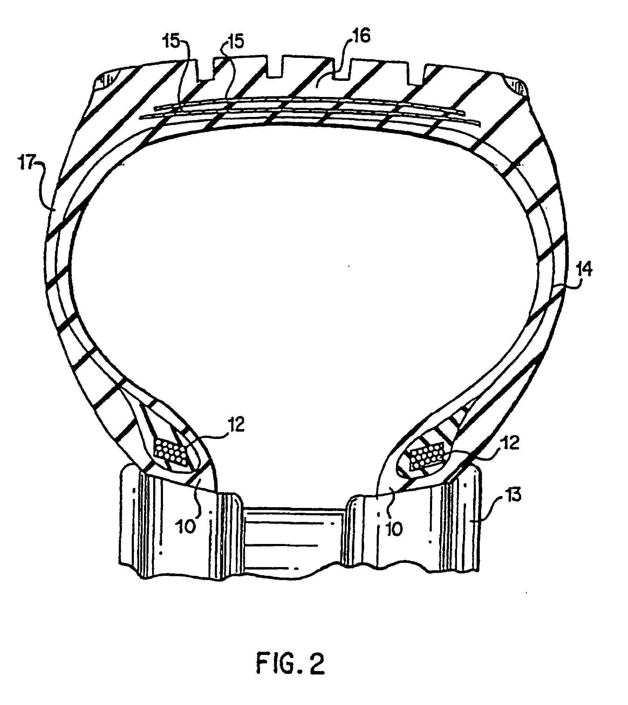

In particular, Figure 2 shows a tire made of a vulcanized elastomeric matrix and a reinforcing structure comprising at least one steel wire coated with a layer of a ZnMoX alloy as above defined. In a preferred embodiment, the vulcanized elastomeric matrix of said tire is obtained from a mixture comprising at least one vulcanizible elastomer, at least one vulcanizing agent consisting of sulphur or a derivative thereof, and a salt of bivalent cobalt selected from the group comprising cobalt-boron 2-ethyl-esanoate-neodecanoate and cobalt neodecanoate according to the present invention.

Said tire is mounted on a rim 13, and is composed of: bead 10, bead core 12, carcass ply 14, belt 15, tread 16 and sidewalls 17. The belts 15 are made of cords of steel wire coated with a layer of a ZnMoX alloy as above defined.

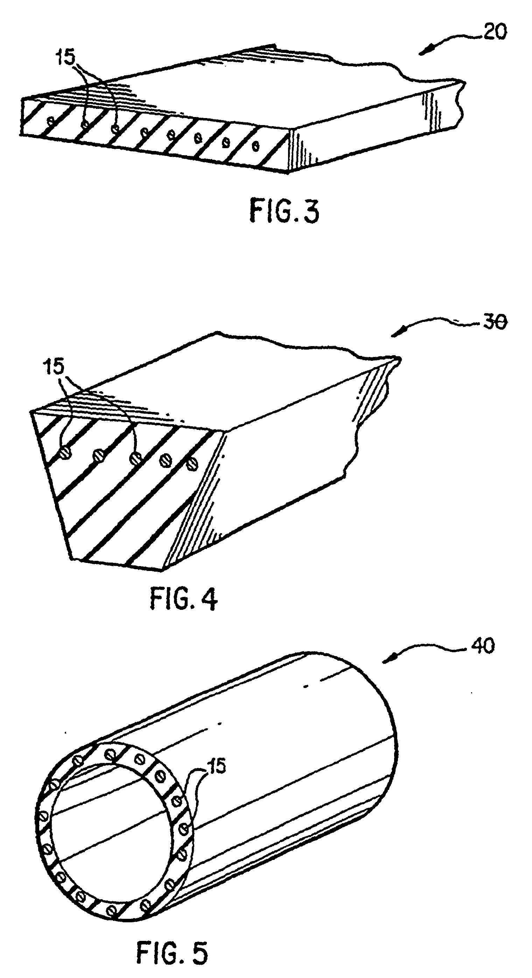

In turn, Figures 3 through 5 show a conveyor belt 20, a transmission belt 30 and a flexible hose 40, respectively, each of which is made of a vulcanized elastomeric matrix reinforced by cords 15 made of steel wires coated with a layer of ZnMoX alloy as above defined. Preferably, in each of said articles the vulcanized elastomeric matrix is obtained from a mixture comprising at least one vulcanizible elastomer, at least one vulcanizing agent consisting of sulphur or a derivative thereof, and a salt of bivalent cobalt selected from the group comprising cobalt-boron 2-ethyl-esanoate-neodecanoate and cobalt neodecanoate according to the present invention.

In the following Examples the abbreviation 3x4x0.22 means a cord made of 3 strands, each of them made of 4 wires of 0.22 mm in diameter.

Other abbreviations used in the examples have the following meanings:
N.R. = natural rubber,
C.B. = carbon black,
HMMM = hexamethoxymethylmelamine
DCBS = N,N'-dicyclohexyl-2-benzothiazylsulphenamide.

The amounts of the components of the vulcanizable mixtures exemplified are expressed in parts by weight.

The examples which follow serve to illustrate the present invention without, however, limiting it in any way.

### EXAMPLE 1

### Deposition of the alloy

A galvanic bath, capable of depositing on a steel wire a layer of a zinc/cobalt/molybdenum ternary alloy consisting of 99.9% by weight of zinc, 0.05% by weight of cobalt and 0.05% by weight of molybdenum, has the following composition:

| | |
|---|---|
| Zn⁺⁺ | 1.91 mol/litre |
| Co⁺⁺ | 0.10 mol/litre |
| Mo⁺⁺ | 0.002 mol/litre |
| Mg⁺⁺ | 0.20 mol/litre |

The starting materials used to prepare the abovementioned bath were:

| | |
|---|---|
| zinc sulphate heptahydrate | 550 grams/litre |
| cobalt sulphate heptahydrate | 30 grams/litre |
| (NH₄)₆Mo₇O₂₄.4H₂O | 0.35 gram/litre |
| magnesium sulphate heptahydrate | 50 grams/litre |

The operating conditions were:

| | |
|---|---|
| bath temperature | 25°C |
| bath pH | 2 |
| cathode current density (zinc anodes) | 25 A/dm² |
| throughput speed of the wire | 18 m/min |

A layer of Zn/Co/Mo ternary alloy 1.5 microns thick was thus obtained.

Working in a similar manner, but replacing the cobalt salt with a suitable iron or nickel salt, coatings of similar thickness can be obtained, consisting of a Zn/Fe/Mo or Zn/Ni/Mo ternary alloy, respectively.

### EXAMPLE 2

### Deposition of the alloy

A galvanic bath, capable of depositing on a steel wire a layer of a zinc/cobalt/molybdenum ternary alloy consisting of 95% by weight of zinc, 2% by weight of cobalt and 3% by weight of molybdenum, has the following composition:

| | |
|---|---|
| Zn⁺⁺ | 1.565 mol/litre |
| Co⁺⁺ | 0.43 mol/litre |
| Mo⁺⁺ | 0.0085 mol/litre |
| Mg⁺⁺ | 0.20 mol/litre |

The starting materials used to prepare the abovementioned bath were:

| | |
|---|---|
| zinc sulphate heptahydrate | 450 grams/litre |
| cobalt sulphate heptahydrate | 120 grams/litre |
| (NH₄)₆Mo₇O₂₄.4H₂O | 1.25 grams/litre |
| magnesium sulphate heptahydrate | 50 grams/litre |

The operating conditions were:

| | |
|---|---|
| bath temperature | 35°C |
| bath pH | 2 |
| cathode current density (zinc anodes) | 35 A/dm² |
| throughput speed of the wire | 25 m/min |

A layer of Zn/Co/Mo ternary alloy 2 microns thick was thus obtained.

Working in a similar manner, but replacing the cobalt salt with a suitable iron or nickel salt, coatings of similar thickness can be obtained, consisting of a Zn/Fe/Mo or Zn/Ni/Mo ternary alloy, respectively.

### EXAMPLE 3

### Deposition of the alloy

A galvanic bath, capable of depositing on a steel wire a layer of a zinc/cobalt/molybdenum ternary alloy consisting of 99.1% by weight of zinc, 0.5% by weight of cobalt and 0.4% by weight of molybdenum, has the following composition:

| | |
|---|---|
| Zn⁺⁺ | 1.91 mol/litre |
| Co⁺⁺ | 0.43 mol/litre |
| Mo⁺⁺ | 0.004 mol/litre |
| Mg⁺⁺ | 0.20 mol/litre |

The starting materials used to prepare the abovementioned bath were:

| | |
|---|---|
| zinc sulphate heptahydrate | 550 grams/litre |
| cobalt sulphate heptahydrate | 120 grams/litre |
| (NH₄)₆Mo₇O₂₄.4H₂O | 0.75 gram/litre |
| magnesium sulphate heptahydrate | 50 grams/litre |

The operating conditions were:

| | |
|---|---|
| bath temperature | 25°C |
| bath pH | 2 |
| cathode current density (zinc anodes) | 35 A/dm² |
| throughput speed of the wire | 36 m/min |

A layer of Zn/Co/Mo ternary alloy 2 microns thick was thus obtained.

Working in a similar manner, but replacing the cobalt salt with a suitable iron or nickel salt, coatings of similar thickness can be obtained, consisting of a Zn/Fe/Mo or Zn/Ni/Mo ternary alloy, respectively.

### EXAMPLE 4

### Corrosion resistance

The corrosion resistance was determined by measuring the time required to initiate the formation of rust and of zinc oxide on a steel wire (1.30 mm in diameter) coated according to the invention, immersed in an aqueous 4% NaCI solution at 25°C.

The coating had the following composition:
wire A : 99.1% of zinc, 0.5% of cobalt and 0.4% of molybdenum.

The results are given in Table 1.

**Table 1**

| Coating | Time for formation of 90% of ZnO (hours) | Time for formation of 5% rust (hours) |
|---|---|---|
| A | 29 | 59 |

### COMPARATIVE EXAMPLE 1

### Corrosion resistance

The process was performed as in Example 4 above, except that the test was carried out on five steel wires (1.30 mm in diameter) coated according to the prior art.

The coatings had the following compositions:
wire B: 99.5% of zinc and 0.5% of manganese;
wire C: 97.5% of zinc and 2.5% of manganese;
wire D: 60% of zinc and 40% of manganese;
wire E: 99.5% of zinc and 0.5% of cobalt;
wire F: 67% of copper and 33% of zinc (brass).

The results are given in Table 2.

**Table 2**

| Coating | Time for formation of 90% of ZnO (hours) | Time for formation of 5% rust (hours) |
|---|---|---|
| B | 6 | 38 |
| C | 15 | 20 |
| D | 29 | 38 |
| E | 2 | 35 |
| F | - | 1 |

### EXAMPLE 5

### Adhesion to the vulcanized elastomeric material

The adhesion to the vulcanized elastomeric material was measured on test pieces of vulcanized mixture on a steel strand of the invention (made up of 4 wires 0.22 mm in diameter) by the method described in "Kautschk und Gummi Kunststoffe", 5, 228-232 (1969), which measures the force required to pull a cord out of a cylinder of vulcanized rubber.

The "pull-out force" was measured in Newtons using an electronic dynamometer. The values were measured both on freshly prepared vulcanized test pieces and on test pieces after age-hardening for one week at a temperature of 65°C and at 90% relative humidity (R.H.).

The composition of the mixture which formed the vulcanized rubber was, in parts % by weight, as follows:

| | |
|---|---|
| natural rubber | 100 |
| ZnO | 8 |
| divalent cobalt | 0.2 |
| carbon black | 50 |
| silica | 10 |
| resorcinol | 3 |
| hexamethoxymethylenemelamine | 2.4 |
| dicyclohexylbenzothiazolesulphenamide | 1.1 |
| sulphur | 4 |
| trimercaptotriazine | 0.5 |

The results are shown in Table 3.

**Table 3**

| ZnCoMo coating | Initial pull-out force (N) | ± SD (N) | End pull-out force (N) | ± SD (N) |
|---|---|---|---|---|
| Co = 0.5% Mo = 0.4% | 680 | 26 | 650 | 30 |
| SD = standard deviation. | | | | |

### COMPARATIVE EXAMPLE 2

### Adhesion to the vulcanized elastomeric material

The process was performed in a similar manner to that of Example 5 above, except that test pieces of mixture, having the abovementioned composition, vulcanized on two steel strands of the prior art (each made up of 4 wires 0.22 mm in diameter) were used.

The results are shown in Table 4.

**Table 4**

| Coating | Initial pull-out force (N) | ± SD (N) | End pull-out force (N) | ± SD (N) |
|---|---|---|---|---|
| brass* | 680 | 27 | 600 | 29 |
| ZnCo** | 600 | 22 | 570 | 31 |

| | | | | |
|---|---|---|---|---|
| SD = standard deviation * Cu = 67% and Zn = 33%; | | | | |
| ** Zn = 99.5% and Co = 0.5%. | | | | |

### EXAMPLE 6

### Drawability

A steel wire (1.30 mm in diameter), coated according to the invention, was drawn to a final diameter of 0.22 mm at a speed of 20 m/sec in a device of the HT 18 type from the company Herborn.

The number of metres of wire produced before the dies needed to be replaced were thus measured. The weight percentage of loss of Zn/Co/Mo alloy deposited was also measured.

Table 5 shows the results obtained.

**Table 5**

| Zn/Co/Mo coating | metres of wire produced × 10³ | loss of Zn/Co/Mo alloy deposited (%) |
|---|---|---|
| Co = 0.5% Mo = 0.4% | 2000 | 10 |

### COMPARATIVE EXAMPLE 3

### Drawability

The process was performed in a similar manner to that of Example 6 above, except that two steel wires of the prior art were drawn.

Table 6 shows the results obtained.

**Table 6**

| Coating | metres of wire produced × 10³ | loss of coating deposited (%) |
|---|---|---|
| brass * | 2000 | 12 |
| ZnCo ** | 1000 | 15 |

| | | |
|---|---|---|
| * Cu = 67% and Zn = 33%; | | |
| ** Zn = 99.5% and Co = 0.5%. | | |

### EXAMPLE 7

### Vulcanized Elastomeric Material

Cylindrical test samples were prepared by burying steel wire cords (3x4x0.22) coated with a ZnCoMo alloy layer (comprising 0.5% of Co and 0.4% of Mo) having 0.20 micron thick, in a mixture having the composition shown herein below. The mixture was then vulcanized at 151°C for 40 minutes.

The burial length of the cords in the test samples was 12 mm.

| Ingredients | (p/p) % |
|---|---|
| N.R. | 100 |
| ZnO | 5 |
| C.B. | 42 |
| silica | 13 |
| aromatic oil | 5 |
| Co⁺⁺ | 0.2^{a)} |
| resorcin | 2.5 |
| HMMM | 3.3 |
| DCBS | 0.8 |
| sulphur | 5 |
| protective agents | 3 |

| | |
|---|---|
| a = as boron-cobalt 2-ethylhexanoate-neodecanoate. | |

### EXAMPLE 8

### Adhesion to Vulcanized Elastomeric Material

Adhesion was measured in a similar manner to that of Example 5 above, except that the test samples were prepared as described in the - Example 7 above.

The pull out force was measured in Newtons with an electronic dynamometer.

The coating degree of the cords extracted from each test sample was graded according to a coating index ranking from 1 to 4 depending on the percent of the cord surface which was still well coated by elastomeric material.

Initial adhesion values (Test I) and the adhesion values measured after having kept the test samples in a climatic room at 65°C and 90% R.H. for 8 days (Test II) are shown in the following Table 7 where the first number is the adhesion value, as an average on 8 tests, while the index in brackets is the coating degree of the cords.

**Table 7**

| 3x4x0.22 Cord^{(*)} | |
|---|---|
| Test I | 646 (4) |
| Test II | 636 (3.5) |

| | |
|---|---|
| (*) made of wires coated with Zn/Co/Mo alloy wherein Co content was 0.5% and Mo content was 0.4%. | |

## Claims

1. Reinforcing structure for manufactured products made of vulcanized elastomeric material, comprising a plurality of cords each composed of a plurality of surface-treated steel wires, **characterized in that** the said wires are coated with a ZnMoX alloy in which X is a metal chosen from the group comprising cobalt, iron and nickel.

2. Reinforcing structure according to Claim 1, **characterized in that** the said alloy has an Mo content of from 0.05 to 3% by weight.

3. Reinforcing structure according to Claim 2, **characterized in that** the said alloy has an Mo content of from 0.1 to 1% by weight.

4. Reinforcing structure according to Claim 1, **characterized in that** the said alloy has a Zn content of from 95 to 99.9% by weight.

5. Reinforcing structure according to Claim 4, **characterized in that** the said alloy has a Zn content of from 98 to 99.5% by weight.

6. Reinforcing structure according to Claim 1, **characterized in that** the said alloy has a content of metal X of from 0.05 to 2% by weight.

7. Reinforcing structure according to Claim 6, **characterized in that** the said alloy has a content of metal X of from 0.1 to 1% by weight.

8. Reinforcing structure according to Claim 1, **characterized in that** the said alloy is formed by electrodeposition on the surface of the said steel wire.

9. Manufactured product made of vulcanized elastomeric material, comprising a steel wire, **characterized in that** the said wire is coated with an alloy ZnMoX in which X is a metal chosen from the group comprising cobalt, iron and nickel.

10. Manufactured product according to Claim 9, **characterized in that** the said alloy has an Mo content of from 0.05 to 3% by weight.

11. Manufactured product according to Claim 10, **characterized in that** the said alloy has an Mo content of from 0.1 to 1% by weight.

12. Manufactured product according to Claim 9, **characterized in that** the said alloy has a Zn content of from 95 to 99.9% by weight.

13. Manufactured product according to Claim 12, **characterized in that** the said alloy has a Zn content of from 98 to 99.5% by weight.

14. Manufactured product according to Claim 9, **characterized in that** the said alloy has a content of metal X of from 0.05 to 2% by weight.

15. Manufactured product according to Claim 14, **characterized in that** the said alloy has a content of metal X of from 0.1 to 1% by weight.

16. Manufactured product according to Claim 9, **characterized in that** the said alloy is formed by electrodeposition on the surface of the said steel wire.

17. An article of manufacture comprising at least one metal wire buried in a vulcanized elastomeric matrix obtained from a mixture comprising al least one vulcanizable elastomer and at least one vulcanizing agent consisting of sulphur or a derivative thereof, **characterized in that** said metal wire is made of steel coated with a ZnMoX alloy in which X is a metal chosen from the group comprising cobalt, iron and nickel, and that said mixture further comprises a salt of bivalent cobalt in an amount corresponding to at least 0.2% by weight of bivalent cobalt metal with respect to the weight of said elastomer.

18. An article of manufacture according to Claim 17, **characterized in that** the said alloy has an Mo content of from 0.05 to 3% by weight.

19. An article of manufacture according to Claim 18, **characterized in that** the said alloy has an Mo content of from 0.1 to 1% by weight.

20. An article of manufacture according to Claim 17, **characterized in that** the said alloy has a Zn content of from 95 to 99.9% by weight.

21. An article of manufacture according to Claim 20, **characterized in that** the said alloy has a Zn content of from 98 to 99.5% by weight.

22. An article of manufacture according to Claim 17, **characterized in that** the said alloy has a content of metal X of from 0.05 to 2% by weight.

23. An article of manufacture according to Claim 22, **characterized in that** the said alloy has a content of metal X of from 0.1 to 1% by weight.

24. An article of manufacture according to Claim 17, **characterized in that** the said alloy is formed by electrodeposition on the surface of the said steel wire.

25. An article of manufacture according to Claim 17, **characterized in that** the amount of said salt of bivalent cobalt corresponds to an amount of bivalent cobalt metal of from 0.2 to 1 % by weight with respect to the weight of said elastomer.

26. An article of manufacture according to claim 17 or 25, **characterized in that** said salt of bivalent cobalt is selected from the group comprising a carboxylate of formula (I)
(R-CO-O)₂Co (I)
wherein R is a C₆₋₂₄ aliphatic or aromatic group,
a cobalt-boron complex of formula (II) 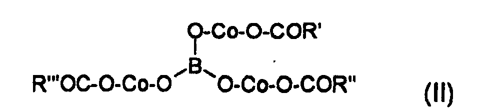 wherein R', R" and R"', equal or different each other, are a C₆₋₂₄ aliphatic or aromatic group, and mixture thereof.

27. An article of manufacture according to claim 26, **characterized in that** R-CO-O-, R'-CO-O-, R"-CO-O- and R"'-CO-O- are selected from the group comprising n-heptanoate, 2,2-dimethylpentanoate, 2-ethyl-pentanotate, 4,4-dimethyl-pentanoate, 2-ethyl-esanoate, n-octanoate, 2,2-dimethyl-esanoate, neodecanoate and naphthenate.

28. An article of manufacture according to any of claims from 17 to 27, **characterized in that** the said salt of bivalent cobalt of formula (I) is cobalt neodecanoate.

29. An article of manufacture according to any of claims from 17 to 27, **characterized in that** the said salt of bivalent cobalt of formula (II) is cobalt-boron 2-ethyl-esanoate-neodecanoate.

30. An article of manufacture according to any of claims from 17 to 29, **characterized in that** said article is a tire, a conveyor belt, a trasmission belt or a flexilble hose.

## Patentansprüche

1. Verstärkungsstruktur für aus vulkanisiertem Elastomermaterial hergestellte Erzeugnisse, die eine Vielzahl von Cords umfasst, von denen jeder aus einer Vielzahl oberflächenbehandelter Stahldrähte zusammengesetzt ist, **dadurch gekennzeichnet, dass** die Drähte mit einer ZnMoX-Legierung beschichtet sind, wobei X ein Metall ist, ausgewählt aus der Gruppe Cobalt, Eisen und Nickel.

2. Verstärkungsstruktur nach Anspruch 1, **dadurch gekennzeichnet, dass** die Legierung einen Mo-Gehalt von 0,05 bis 3 Gew.-% aufweist.

3. Verstärkungsstruktur nach Anspruch 2, **dadurch gekennzeichnet, dass** die Legierung einen Mo-Gehalt von 0,1 bis 1 Gew.-% aufweist.

4. Verstärkungsstruktur nach Anspruch 1, **dadurch gekennzeichnet, dass** die Legierung einen Zn-Gehalt von 95 bis 99,9 Gew.-% aufweist.

5. Verstärkungsstruktur nach Anspruch 4, **dadurch gekennzeichnet, dass** die Legierung einen Zn-Gehalt von 98 bis 99,5 Gew.-% aufweist.

6. Verstärkungsstruktur nach Anspruch 1, **dadurch gekennzeichnet, dass** die Legierung einen Gehalt des Metalls X von 0,05 bis 2 Gew.-% aufweist.

7. Verstärkungsstruktur nach Anspruch 6, **dadurch gekennzeichnet, dass** die Legierung einen Gehalt des Metalls X von 0,1 bis 1 Gew.-% aufweist.

8. Verstärkungsstruktur nach Anspruch 1, **dadurch gekennzeichnet, dass** die Legierung durch elektrochemische Abscheidung auf die Oberfläche des Stahldrahts gebildet wird.

9. Erzeugnis, hergestellt aus vulkanisiertem Elastomermaterial, das einen Stahldraht umfasst, **dadurch ge-kennzeichnet, dass** der Draht mit einer ZnMoX-Legierung beschichtet ist, wobei X ein Metall ist, ausgewählt aus der Gruppe Cobalt, Eisen und Nickel.

10. Erzeugnis nach Anspruch 9, **dadurch gekennzeichnet, dass** die Legierung einen Mo-Gehalt von 0,05 bis 3 Gew.-% aufweist.

11. Erzeugnis nach Anspruch 10, **dadurch gekennzeichnet, dass** die Legierung einem Mo-Gehalt von 0,1 bis 1 Gew.-% aufweist.

12. Erzeugnis nach Anspruch 9, **dadurch gekennzeichnet, dass** die Legierung einen Zn-Gehalt von 95 bis 99,9 Gew.-% aufweist.

13. Erzeugnis nach Anspruch 12, **dadurch gekennzeichnet, dass** die Legierung einen Zn-Gehalt von 98 bis 99,5 Gew.-% aufweist.

14. Erzeugnis nach Anspruch 9, **dadurch gekennzeichnet, dass** die Legierung einen Gehalt an Metall X von 0,05 bis 2 Gew.-% aufweist.

15. Erzeugnis nach Anspruch 14, **dadurch gekennzeichnet, dass** die Legierung einen Gehalt an Metall X von 0,1 bis 1 Gew.-% aufweist.

16. Erzeugnis nach Anspruch 9, **dadurch gekennzeichnet, dass** die Legierung durch elektrochemische Abscheidung auf die Oberfläche des Stahldrahts gebildet wird.

17. Erzeugnis, das wenigstens einen Metalldraht umfasst, der in eine vulkanisierte Elastomer-Grundmasse eingebettet ist, erhalten aus einem Gemisch, das wenigstens ein vulkanisierbares Elastomer und wenigstens ein Vulkanisationsmittel, das aus Schwefel oder einem Derivat davon besteht, umfasst, **dadurch gekennzeichnet, dass** der Metalldraht aus einem mit einer ZnMoX-Legierung beschichteten Stahl hergestellt ist, in der X ein Metall ist, ausgewählt aus der Gruppe Cobalt, Eisen und Nickel, und das Gemisch außerdem ein Salz von zweiwertigem Cobalt in einer Menge, die wenigstens 0,2 Gew.-% des zweiwertigen Cobaltmetalls entspricht, bezogen auf das Gewicht des Elastomers, umfasst.

18. Erzeugnis nach Anspruch 17, **dadurch gekennzeichnet, dass** die Legierung einen Mo-Gehalt von 0,05 bis 3 Gew.-% aufweist.

19. Erzeugnis nach Anspruch 18, **dadurch gekennzeichnet, dass** die Legierung einen Mo-Gehalt von 0,1 bis 1 Gew.-% aufweist.

20. Erzeugnis nach Anspruch 17, **dadurch gekennzeichnet, dass** die Legierung einen Zn-Gehalt von 95 bis 99,9 Gew.-% aufweist.

21. Erzeugnis nach Anspruch 20, **dadurch gekennzeichnet, dass** die Legierung einen Zn-Gehalt von 98 bis 99,5 Gew.-% aufweist.

22. Erzeugnis nach Anspruch 17, **dadurch gekennzeichnet, dass** die Legierung einen Gehalt an Metall X von 0,05 bis 2 Gew.-% aufweist.

23. Erzeugnis nach Anspruch 22, **dadurch gekennzeichnet, dass** die Legierung einen Gehalt an Metall X von 0,1 bis 1 Gew.-% aufweist.

24. Erzeugnis nach Anspruch 17, **dadurch gekennzeichnet, dass** die Legierung durch elektrochemische Abscheidung auf die Oberfläche des Stahldrahtes gebildet wird.

25. Erzeugnis nach Anspruch 17, **dadurch gekennzeichnet, dass** die Menge des Salzes des zweiwertigen Cobalts einer Menge des zweiwertigen Cobaltmetalls von 0,2 bis 1 Gew.-%, bezogen auf das Gewicht des Elastomers, entspricht.

26. Erzeugnis nach Anspruch 17 oder 25, **dadurch gekennzeichnet, dass** das Salz des zweiwertigen Cobalts ausgewählt ist aus der Gruppe, die ein Carboxylat der Formel (I)
(R-CO-O)₂Co (I),
worin R eine C₆₋₂₄-aliphatische oder aromatische Gruppe bedeutet, und einen Co-B-Komplex der Formel (II) 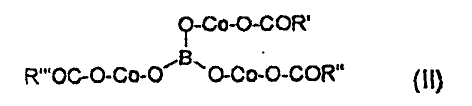 worin R', R" und R''' gleich oder verschieden sind und eine C₆₋₂₄-aliphatische oder aromatische Gruppe bedeuten, sowie ein Gemisch davon umfasst.

27. Erzeugnis nach Anspruch 26, **dadurch gekennzeichnet, dass** R-CO-O-, R'-CO-O-, R"-CO-O- und R'''-CO-O- ausgewählt sind aus der Gruppe, die n-Heptanoat, 2,2-Dimethylpentanoat, 2-Ethyl-pentanoat, 4,4-Dimethyl-pentanoat, 2-Ethyl-esanoat, n-Octanoat, 2,2-Dimethylesanoat, Neodecanoat und Naphtenat umfasst.

28. Erzeugnis nach einem der Ansprüche 17 bis 27, **dadurch gekennzeichnet, dass** das Salz des zweiwertigen Cobalts der Formel (I) Co-Neodecanoat ist.

29. Erzeugnis nach einem der Ansprüche 17 bis 27, **dadurch gekennzeichnet, dass** das Salz des zweiwertigen Cobalts der Formel (II) Co-B-2-ethyl-esanoatneodecanoat ist.

30. Erzeugnis nach einem der Ansprüche 17 bis 29, **dadurch gekennzeichnet daß** das Erzeugnis ein Reifen, ein Förderband, ein Transmissionsriemen oder ein biegsamer Schlauch ist.

## Revendications

1. Structure de renforcement pour produits manufacturés en matière élastomère vulcanisée, comprenant plusieurs cordes dont chacune est constituée de plusieurs fils d'acier traités en surface, **caractérisée en ce que** lesdits fils sont revêtus d'un alliage ZnMoX où X désigne un métal choisi parmi le cobalt, le fer et le nickel.

2. Structure de renforcement selon la revendication 1, **caractérisée en ce que** ledit alliage a une teneur en Mo de 0,05 à 3 % en poids.

3. Structure de renforcement selon la revendication 2, **caractérisée en ce que** ledit alliage a une teneur en Mo de 0,1 à 1 % en poids.

4. Structure de renforcement selon la revendication 1, **caractérisée en ce que** ledit alliage a une teneur en Zn de 95 à 99,9 % en poids.

5. Structure de renforcement selon la revendication 4, **caractérisée en ce que** ledit alliage a une teneur en Zn de 98 à 99,5 % en poids.

6. Structure de renforcement selon la revendication 1, **caractérisée en ce que** ledit alliage a une teneur en métal X de 0,05 à 2 % en poids.

7. Structure de renforcement selon la revendication 6, **caractérisée en ce que** ledit alliage a une teneur en métal X de 0,1 à 1 % en poids.

8. Structure de renforcement selon la revendication 1, **caractérisée en ce que** ledit alliage est formé par dépôt électrolytique sur la surface dudit fil d'acier.

9. Produit manufacturé en matière élastomère vulcanisée, comprenant un fil d'acier, **caractérisé en ce que** ledit fil est revêtu d'un alliage ZnMoX où X désigne un métal choisi parmi le cobalt, le fer et le nickel.

10. Produit manufacturé selon la revendication 9, **caractérisé en ce que** ledit alliage a une teneur en Mo de 0,05 à 3 % en poids.

11. Produit manufacturé selon la revendication 10, **caractérisé en ce que** ledit alliage a une teneur en Mo de 0,1 à 1 % en poids.

12. Produit manufacturé selon la revendication 9, **caractérisé en ce que** ledit alliage a une teneur en Zn de 95 à 99,9 % en poids.

13. Produit manufacturé selon la revendication 12, **caractérisé en ce que** ledit alliage a une teneur en Zn de 98 à 99,5 % en poids.

14. Produit manufacturé selon la revendication 9, **caractérisé en ce que** ledit alliage a une teneur en métal X de 0,05 à 2 % en poids.

15. Produit manufacturé selon la revendication 14, **caractérisé en ce que** ledit alliage a une teneur en métal X de 0,1 à 1 % en poids.

16. Produit manufacturé selon la revendication 9, **caractérisé en ce que** ledit alliage est formé par dépôt électrolytique sur la surface dudit fil d'acier.

17. Article manufacturé comprenant au moins un fil métallique noyé dans une matrice élastomère vulcanisée, obtenue à partir d'un mélange comprenant au moins un élastomère vulcanisable et au moins un agent de vulcanisation constitué de soufre ou d'un dérivé du soufre, **caractérisé en ce que** ledit fil métallique est en acier revêtu d'un alliage ZnMoX où X désigne un métal choisi parmi le cobalt, le fer et le nickel, et **en ce que** ledit mélange renferme en outre un sel de cobalt divalent en une proportion correspondant à au moins 0,2 % en poids de cobalt métal divalent par rapport au poids dudit élastomère.

18. Article manufacturé selon la revendication 17, **caractérisé en ce que** ledit alliage a une teneur en Mo de 0,05 à 3 % en poids.

19. Article manufacturé selon la revendication 18, **caractérisé en ce que** ledit alliage a une teneur en Mo de 0,1 à 1 % en poids.

20. Article manufacturé selon la revendication 17, **caractérisé en ce que** ledit alliage a une teneur en Zn de 95 à 99,9 % en poids.

21. Article manufacturé selon la revendication 20, **caractérisé en ce que** ledit alliage a une teneur en Zn de 98 à 99,5 % en poids.

22. Article manufacturé selon la revendication 17, **caractérisé en ce que** ledit alliage a une teneur en métal X de 0,05 à 2 % en poids.

23. Article manufacturé selon la revendication 22, **caractérisé en ce que** ledit alliage a une teneur en métal X de 0,1 à 1 % en poids.

24. Article manufacturé selon la revendication 17, **caractérisé en ce que** ledit alliage est formé par dépôt électrolytique sur la surface dudit fil d'acier.

25. Article manufacturé selon la revendication 17, **caractérisé en ce que** la proportion dudit sel de cobalt divalent correspond à une proportion de cobalt métal divalent de 0,2 à 1 % en poids par rapport au poids dudit élastomère.

26. Article manufacturé selon la revendication 17 ou 25, **caractérisé en ce que** ledit sel de cobalt divalent est choisi parmi les carboxylates de formule (I)
(R-CO-O)₂Co (I)
dans laquelle R désigne un groupe aliphatique ou aromatique, ayant 6 à 24 atomes de carbone, les complexes cobalt-bore de formule (II) 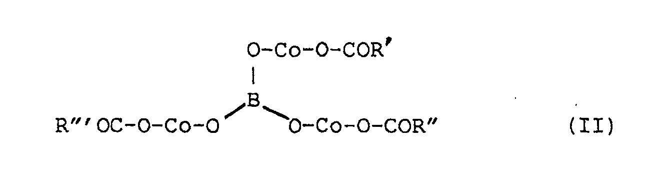 dans laquelle R', R" et R"' sont identiques ou différents et représentent chacun un groupe aliphatique ou aromatique, ayant 6 à 24 atomes de carbone, et leurs mélanges.

27. Article manufacturé selon la revendication 26, **caractérisé en ce que** R-CO-O-, R'-CO-O-, R"-CO-O- et R"'-CO-O- sont choisis parmi les groupes n-heptanoate, 2,2-diméthyl-pentanoate, 2-éthyl-pentanoate, 4,4-diméthyl-pentanoate, 2-éthyl-hexanoate, n-octanoate, 2,2-diméthyl-hexanoate, néodécanoate et naphténate.

28. Article manufacturé selon l'une quelconque des revendications 17 à 27, **caractérisé en ce que** ledit sel de cobalt divalent de formule (I) est le néodécanoate de cobalt.

29. Article manufacturé selon l'une quelconque des revendications 17 à 27, **caractérisé en ce que** ledit sel de cobalt divalent de formule (II) est le 2-éthyl-hexanoate-néodécanoate de cobalt-bore.

30. Article manufacturé selon l'une quelconque des revendications 17 à 29, **caractérisé en ce que** cet article est un pneu, une courroie de convoyage, une courroie de transmission ou un tuyau flexible.
